(19) Europäisches Patentamt
European Patent Office
Office européen des brevets

(11) EP 2 586 748 A1

(12) EUROPEAN PATENT APPLICATION
published in accordance with Art. 153(4) EPC

(43) Date of publication:
01.05.2013 Bulletin 2013/18

(51) Int Cl.:
C02F 1/44 (2006.01)    B01D 21/00 (2006.01)
B01D 21/24 (2006.01)   B01D 61/02 (2006.01)
B01D 61/58 (2006.01)   C02F 3/12 (2006.01)

(21) Application number: 11792239.3

(22) Date of filing: 12.05.2011

(86) International application number:
PCT/JP2011/060914

(87) International publication number:
WO 2011/155281 (15.12.2011 Gazette 2011/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 26.01.2011   JP 2011014390
09.06.2010   JP 2010132056

(71) Applicant: Kobelco Eco-Solutions Co., Ltd
Kobe-shi, Hyogo 651-0072 (JP)

(72) Inventors:
• TAKATA, Kazutaka
  Kobe-shi, Hyogo 651-0072 (JP)

• SATO, Hiromi
  Kobe-shi, Hyogo 651-0072 (JP)
• ITO, Yutaka
  Tokyo 141-0001 (JP)
• SHIMADA, Mitsushige
  Kobe-shi, Hyogo 651-2241 (JP)
• TACHIMI, Tomoyuki
  Kobe-shi, Hyogo 651-2241 (JP)
• NOSHITA, Masanobu
  Kobe-shi, Hyogo 651-0072 (JP)

(74) Representative: Isarpatent
Patent- und Rechtsanwälte
Postfach 44 01 51
80750 München (DE)

(54) FRESHWATER-GENERATING DEVICE, AND FRESHWATER-GENERATING METHOD

(57) An object is to provide a fresh water generating apparatus that is capable of efficiently and stably producing fresh water. Provided is a fresh water generating apparatus equipped with a seawater-treating reverse osmosis membrane device that produces fresh water from seawater by a reverse osmosis membrane, including a mixing section that mixes wastewater as dilution water with seawater to produce mixed water, and a first seawater-treating reverse osmosis membrane device that acts as the seawater-treating reverse osmosis membrane device to filter the mixed water, in which the apparatus is configured so that used water that is wastewater resulting from the use of the produced fresh water as service water is mixed as dilution water with seawater at the mixing section.

Fig . 1

**Description**

FIELD OF THE INVENTION

The present invention relates to a fresh water generating apparatus and a fresh water generating method, and more specifically relates to a fresh water generating apparatus and a fresh water generating method that generate fresh water by way of filtration using a reverse osmosis membrane.

BACKGROUND OF THE INVENTION

In recent years, there has been a problem that rain falls locally or in a short period of time due to global warming or the like and hence water resources are unevenly distributed geographically or temporally, or a water holding capacity of a mountainous area is lowered due to decline in forest industry or deforestation, which leads to difficulty in stably securing water resources.

In order to stably secure water resources, there has been proposed desalinating seawater by filtration process using a reverse osmosis membrane (RO membrane), for example, in seafront areas (e.g., Patent Document 1).

However, the above technique for desalinating seawater poses a problem in that filtration of seawater by a reverse osmosis membrane (RO membrane) requires seawater to be pressurized and pressure-fed to a reverse osmosis membrane device by a pump or the like, and therefore the higher the salt concentration (salinity) of seawater, the larger the energy required.

Meanwhile, separately from the above seawater, for example, among sewage water, or permeate and concentrate generated by membrane separation of sewage water, although permeate is partly recycled at a site, but they are mostly discharged into the oceans or rivers, and, especially, little concentrate is efficiently utilized.

In view of the above, there has been proposed a method for producing fresh water, which includes subjecting sewage water to membrane treatment to produce concentrate, mixing the concentrate as dilution water with seawater to produce mixed water, and subjecting this mixed water to membrane separation by a reverse osmosis membrane device to produce fresh water (e.g., Non-patent Literature 1).

PRIOR ART REFERENCE

PATENT DOCUMENT

Patent Document 1: Japanese Patent Application Laid-open No. 2008-55317

NON-PATENT LITERATURE

Non-patent Literature 1: "Water circulation in seafront industrial city, Significant reduction of power by membrane treatment, Development of process by KOBELCO ECO-SOLUTION CO., LTD., ET AL., Adopted in the projects of Japan, Ministry of Economy, Trade and Industry", The Chemistry Daily, Page 10, March 3, 2009; Japanese language)

DISCLOSURE OF THE INVENTION

PROBLEMS TO BE SOLVED BY THE INVENTION

According to the above method, in which concentrate being lower in salt concentration than seawater is mixed as dilution water with seawater to produce mixed water; and this mixed water is subjected to membrane treatment to produce fresh water, it is possible to prevent or suppress increase in pressure for pressure-feeding mixed water into a reverse osmosis membrane device, as compared with the case where seawater is pressure-fed. Thus, there are advantageous effects that it is possible to prevent or suppress increase in the amount of energy required for pressure feeding per unit amount of produced fresh water, and effectively utilize sewage water.

That is, according to the above method, there is an advantageous effect that it is possible to efficiently produce fresh water, and effectively utilize sewage water.

However, under the recent situations, in which there is a strong demand for stable supply of fresh water as service water, or great concern for the environment, such as more efficient utilization of energy, it is desirable to provide a method that is capable of producing fresh water more efficiently and stably.

In consideration of the above demands, an object of the present invention is to provide a fresh water generating apparatus and a fresh water generating method that are capable of efficiently and stably producing fresh water.

MEANS FOR SOLVING PROBLEMS

According to the present invention, there is provided a fresh water generating apparatus equipped with a seawater-treating reverse osmosis membrane device that produces fresh water from seawater by a reverse osmosis membrane, including a mixing section that mixes wastewater as dilution water with seawater to produce mixed water, and a first seawater-treating reverse osmosis membrane device that acts as the seawater-treating reverse osmosis membrane device to filter the mixed water, in which the apparatus is configured so that used water that is wastewater resulting from the use of the produced fresh water as service water is mixed as dilution water with seawater at the mixing section.

According to the above fresh water generating apparatus, in which used water resulting from the use of the produced fresh water as service water is also used as dilution water for diluting seawater, there is an advantageous effect that fresh water can be efficiently and stably produced.

The mixing section of the fresh water generating apparatus of the present invention is preferably configured so that a portion of seawater to be subjected to membrane treatment is mixed with the dilution water to produce mixed water, and the apparatus preferably includes a second seawater-treating reverse osmosis membrane device that acts as the aforesaid seawater-treating reverse osmosis membrane device to filter the remaining portion of the seawater to be subjected to membrane treatment, in an unmixed state with the dilution water.

According to the above fresh water generating apparatus, if fresh water, which is produced by filtering the remaining portion of the seawater to be subjected to membrane treatment, in an unmixed state with the dilution water, is used for domestic purposes (especially for drinking), agricultural use (e.g., for a vegetable plant) and a food factory, there is an advantageous effect of eliminating fear, causing the user to feel uncomfortable or eliminating an adverse effect against a human body. That is, there is an advantageous effect that fresh water can be efficiently produced according to intended use.

The fresh water generating apparatus, which includes the second seawater-treating reverse osmosis membrane device, is preferably configured so that used water that is wastewater resulting from the use of fresh water produced by the first reverse osmosis membrane device as service water, and used water that is wastewater resulting from the use of fresh water produced by the second seawater-treating reverse osmosis membrane device as service water are mixed as dilution water with seawater at the mixing section.

According to the above fresh water generating apparatus, seawater is further diluted so that the seawater can be filtered with lower power. That is, there is an advantageous effect that fresh water can be more efficiently and stably produced.

The fresh water generating apparatus of the present invention preferably further includes a used water-treating reverse osmosis membrane device that produces concentrate and permeate that is fresh water by a reverse osmosis membrane from used water that is wastewater resulting from the use of the produced fresh water as service water, wherein the apparatus is configured so that the concentrate that is used water is mixed as dilution water with seawater at the mixing section.

According to the above fresh water generating apparatus, in which permeate that is fresh water can be produced by the used water-treating reverse osmosis membrane device, there is an advantageous effect that fresh water can be more efficiently produced.

When used water is organic wastewater, the fresh water generating apparatus of the present invention preferably includes a biological treatment section that biologically treats the used water to produce biologically treated water and is configured so that the biologically treated water is mixed as dilution water with seawater at the mixing section.

According to the above fresh water generating apparatus, there is an advantageous effect that it is possible to prevent or suppress organic solid matter from adhering onto a membrane surface of the first seawater-treating reverse osmosis membrane device, and hence more efficiently produce fresh water, as compared with the case where used water is flown directly into the first seawater-treating reverse osmosis membrane device.

Furthermore, the fresh water generating apparatus, which includes the biological treatment section and is configured so that the biologically treated water is mixed as dilution water with seawater at the mixing section, preferably includes a clarifier that filters the biologically treated water by at least one of a microfiltration membrane, an ultrafiltration membrane and a sand filtration device, in which the apparatus is configured so that permeate of the clarifier is mixed as dilution water with seawater at the mixing section.

According to the above fresh water generating apparatus, there is an advantageous effect that it is possible to further prevent or suppress organic solid matter from adhering onto a membrane surface of the first seawater-treating reverse osmosis membrane device, and hence more efficiently produce fresh water, as compared with the case where biologically treated water is flown directly into the first seawater-treating reverse osmosis membrane device.

The fresh water generating apparatus of the present invention preferably includes a sedimentation section that separates used water by sedimentation to produce supernatant that is sedimentation treated water, wherein the apparatus is configured so that the supernatant is mixed as dilution water with seawater at the mixing section.

According to the above fresh water generating apparatus, there is an advantageous effect that it is possible to prevent or suppress solid matter from adhering onto a membrane surface of the first seawater-treating reverse osmosis membrane device, and hence more efficiently produce fresh water, as compared with the case where used water is flown directly into the first seawater-treating reverse osmosis membrane device.

Furthermore, the fresh water generating apparatus, which includes the sedimentation section and is configured so that the supernatant is mixed as dilution water with seawater at the mixing section, preferably includes a clarifier that filters the supernatant by at least one of a microfiltration membrane, an ultrafiltration membrane and a sand filtration device, wherein the apparatus is configured so that permeate of the clarifier is mixed as dilution water with seawater at the mixing section.

According to the above fresh water generating apparatus, there is an advantageous effect that it is possible to further prevent or suppress solid matter from adhering onto a membrane surface of the first seawater-treating reverse osmosis membrane device, and hence more efficiently produce fresh water, as compared with the case where supernatant is flown directly into the first seawater-treating reverse osmosis membrane device.

When used water is organic wastewater, the fresh water generating apparatus, which includes the used water-treating reverse osmosis membrane device, preferably includes a biological treatment section that biologically treats the used water to produce biologically treated water, and a clarifier that filters the biologically treated water by at least one of a microfiltration membrane, an ultrafiltration membrane and a sand filtration device, and is configured so that permeate of the clarifier is filtered as used water at the used water-treating reveres osmosis membrane device.

According to the above fresh water generating apparatus, there is an advantageous effect that it is possible to prevent or suppress organic solid matter from adhering onto a membrane surface of the used water-treating reverse osmosis membrane device, and hence more efficiently produce fresh water, as compared with the case where used water is flown directly into the used water-treating reverse osmosis membrane device.

Furthermore, the fresh water generating apparatus, which includes the used water-treating reverse osmosis membrane device, preferably includes a sedimentation section that separates used water by sedimentation to produce supernatant that is sedimentation treated water, and a clarifier that filters the supernatant by at least one of a microfiltration membrane, an ultrafiltration membrane and a sand filtration device, in which the apparatus is configured so that permeate of the clarifier is filtered as used water at the used water-treating reverse osmosis membrane device.

According to the above fresh water generating apparatus, there is an advantageous effect that it is possible to further prevent or suppress solid matter from adhering onto a membrane surface of the used water-treating reverse osmosis membrane device, and hence more efficiently produce fresh water, as compared with the case where used water is flown directly into the used water-treating reverse osmosis membrane device.

The fresh water generating apparatus, which includes the biological treatment section and the clarifier, preferably includes a biological treatment tank for biological treatment, in which the clarifier includes at least one of a microfiltration membrane and an ultrafiltration membrane, and the clarifier is installed as a submerged membrane below the liquid level within the biological treatment tank.

According to the above fresh water generating apparatus, when activated sludge is used in biological treatment, it is possible to produce only permeate, which contains almost no activated sludge, from biologically treated water containing activated sludge through the submerged membrane. Thus, there is an advantageous effect that the microbial concentration within the biological treatment tank can be easily increased and hence the volume of the biological treatment tank can be reduced. Also, there is an advantageous effect that the fresh water generating apparatus itself can be more reduced in size, as compared with the case where the clarifier is installed outside the biological treatment tank, and it is possible to eliminate the necessity to provide a conduit for returning sludge concentrated at the clarifier to the biological treatment tank.

Furthermore, the fresh water generating apparatus of the present invention preferably includes an ion exchange device that produces ion exchanged water by ion exchange from fresh water produced from the seawater-treating reverse osmosis membrane device.

According to the above fresh water generating apparatus, there is an advantageous effect that ion exchanged water that is fresh water with a low salt concentration can be produced. For example, fresh water, which is a source of water vapor causing rotation of a steam turbine for use in a thermal power plant or the like, preferably has a low salt concentration so as to be able to be efficiently evaporated into vapor with small heat. Since this ion exchanged water has a low salt concentration, the fresh water generating apparatus including the ion exchange device can be appropriately used in producing fresh water for use in a steam turbine.

According to another aspect of the present invention, there is provided a fresh water generating method for producing fresh water from seawater by a seawater-treating reverse osmosis membrane device having a reverse osmosis membrane, which includes mixing wastewater as dilution water with seawater to produce mixed water, filtering the mixed water by a first seawater-treating reverse osmosis membrane device that acts as the seawater-treating reverse osmosis membrane device, and mixing used water that is wastewater, which results from the use of the produced fresh water as service water, as dilution water with seawater.

ADVANTAGES OF THE INVENTION

As described above, according to the present invention, it is possible to efficiently and stably produce fresh water.

BRIEF DESCRIPTION OF THE DRAWINGS

Fig. 1 is a schematic block diagram of a fresh water generating apparatus according to one embodiment of the present invention.
Fig. 2 is a schematic block diagram of a fresh water generating apparatus according to one embodiment of the present invention.
Fig. 3 is a schematic block diagram of a fresh water generating apparatus according to one embodiment of the present invention.
Fig. 4 is a schematic block diagram of a fresh water generating apparatus according to one embodiment of the present invention.
Fig. 5 is a schematic block diagram of a fresh water generating apparatus according to one embodiment of the present invention.
Fig. 6 is a schematic block diagram of a fresh water generating apparatus according to Comparative Example 1.
Fig. 7 is a schematic block diagram of a fresh water generating apparatus according to Comparative Example 2.
Fig. 8 is a schematic block diagram of a fresh water generating apparatus according to Example 1.
Fig. 9 is a schematic block diagram of a fresh water generating apparatus according to Comparative Example 3.
Fig. 10 is a schematic block diagram of a fresh water generating apparatus according to Comparative Example 4.
Fig. 11 is a schematic block diagram of a fresh water generating apparatus according to Example 2.
Fig. 12 is a schematic block diagram of a fresh water generating apparatus according to Example 3.
Fig. 13 is a schematic block diagram of a fresh water generating apparatus according to Example 4.

EMBODIMENT TO CARRY OUT THE INVENTION

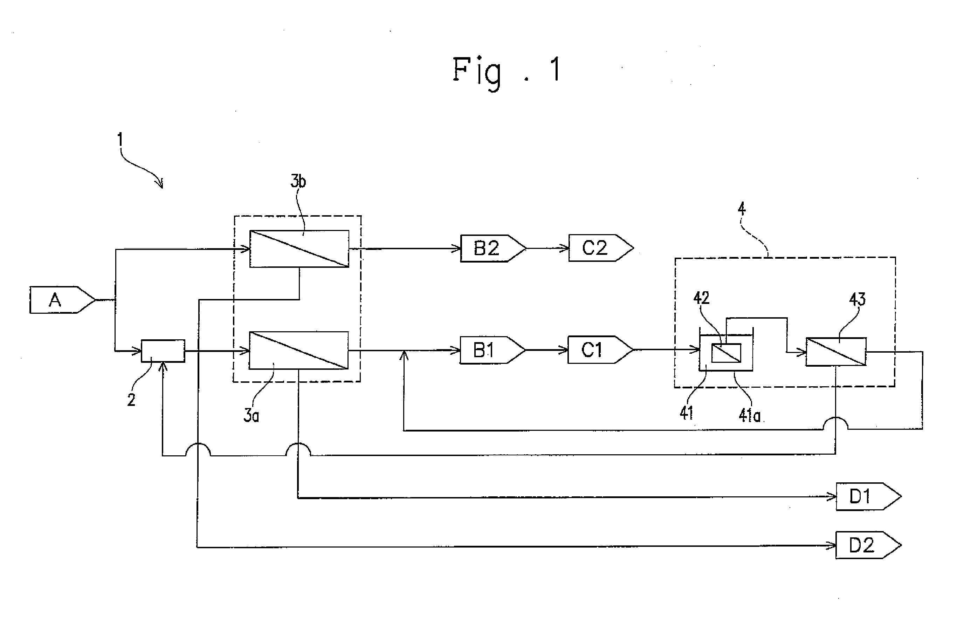

Now, the description will be made for embodiments of the present invention with reference to the drawings attached hereto.
First, the description will be made for a fresh water generating apparatus of this embodiment.
As shown in Fig. 1, a fresh water generating apparatus 1 of this embodiment is configured so that fresh water B1 and B2 are produced from seawater A by way of filtration using reverse osmosis membrane devices 3a and 3b.
The fresh water generating apparatus 1 of this embodiment includes a mixing section 2 that mixes wastewater as dilution water with a portion of seawater A to be subjected to membrane treatment to produce mixed water, a first seawater-treating reverse osmosis membrane device 3a that filters the mixed water to produce first concentrate D1 and first permeate that is first fresh water B1, and a second seawater-treating reverse osmosis membrane device 3b that filters the remaining portion of the seawater A to be subjected to membrane treatment, in an unmixed state with the dilution water, to produce second concentrate D2 and second permeate that is second fresh water B2.
The fresh water generating apparatus 1 of this embodiment is configured so that a portion of the seawater A to be subjected to membrane treatment is transferred to the mixing section 2; wastewater is transferred as dilution water to the mixing section 2; mixed water is transferred to the first seawater-treating reverse osmosis membrane device 3a; the remaining portion of the seawater A to be subjected to membrane treatment is transferred to the second seawater-treating reverse osmosis membrane device 3b; the first concentrate D1 is transferred to a first concentrate storage tank (not shown); and the second concentrate D2 is transferred to a second concentrate storage tank (not shown).
The fresh water generating apparatus 1 of this embodiment is also configured so that the seawater A is filtered by using a clarifier (not shown) that has at least one of a microfiltration membrane, an ultrafiltration membrane and a sand filtration device, before the seawater A is transferred to the mixing section 2 and the second seawater-treating reverse osmosis membrane device 3b, respectively.
The seawater A is water containing salt, and, for example, the seawater A to be diluted with dilution water is water having a salt concentration of 1.0 to 8.0 % by mass, and more specifically, water having a salt concentration of 2.5 to 6.0 % by mass.
The seawater A is not herein necessarily limited to water in the sea, and is intended to include water in land area, such as water of lake (salt lake, brackish lake), water of swamps, and water of pond, as long as they are water having a salt concentration of 1.0 % by mass or more.
The produced fresh water B1 and B2 can be used as service water, such as industrial water (water for a food factory, a pulp plant, a steel factory, a chemical factory and a factory in electronics industry), water for domestic use (e.g., drinking water or the like), and water for agricultural use.

Especially, when the fresh water B2, which is fresh water produced by filtering the seawater A in an unmixed state with the wastewater, is used as water for domestic use (drinking water or the like), water for agricultural use (e.g., water for a vegetable plant) or water for a food factory, there is an advantageous effect of eliminating fear causing the user to feel uncomfortable or eliminating an adverse effect against a human body or the like.

When the first fresh water B1 is used as service water, first used water C1 that is wastewater is produced. When the first fresh water B2 is used as service water, second used water C2 that is wastewater is produced.

The fresh water generating apparatus 1 of this embodiment is configured so that the fresh water B1 and B2 are transferred as service water to various sites at which they are used.

Furthermore, the fresh water generating apparatus 1 of this embodiment includes a purification section 4 that purifies the first used water C1 that is wastewater.

The fresh water generating apparatus 1 of this embodiment is configured so that the first used water C1 is transferred to the purification section 4.

The first used water C1 is organic wastewater.

The organic wastewater is wastewater containing organic matter, and, for example, wastewater having a BOD (Biochemical Oxygen Demand), as an index of organic matter concentration, of 2000 mg/L or lower, and more specifically wastewater having a BOD of about 200 mg/L. The organic wastewater is water having a salt concentration lower than the seawater A to be diluted with dilution water. The organic wastewater is, for example, wastewater having a salt concentration ratio relative to the seawater A to be diluted with dilution water being 1 to 0.1 or lower, and is more specifically wastewater having a salt concentration ratio relative to the seawater A to be diluted with dilution water being 1 to 0.01 or lower.

The purification section 4 includes a biological treatment section 41 that biologically treats the first used water C1 to produce biologically treated water, a clarifier 42 that filters and clarifies the biologically treated water by at least one of a microfiltration membrane and an ultrafiltration membrane to produce concentrate and permeate, and a used water-treating reverse osmosis membrane device 43 that produces concentrate and permeate that is the first fresh water B1 by a reverse osmosis membrane (RO membrane) from the permeate produced as the used water C1 from the clarifier 42.

By the clarifying is herein meant rougher filtration than reverse osmosis membrane filtration, that is, a treatment carried out prior to the filtration by a reverse osmosis membrane device to remove impurities (e.g., solid matter or the like) coarser than those filtered by a reverse osmosis membrane (RO membrane).

The biological treatment section 41 includes a biological treatment tank 41a for biological treatment.

By the biological treatment is herein meant decomposition of organic matter contained in water with biological species, such as bacteria, protozoa and metazoan. A specific example of such treatment includes aeration using activated sludge.

In the purification section 4, the clarifier 42 is installed as a submerged membrane below the liquid level within the biological treatment tank 41a.

The purification section 4 is configured so that the first used water C1 is transferred to the biological treatment section 41, and permeate of the clarifier 42 is transferred to the used water-treating reverse osmosis membrane device 43.

The fresh water generating apparatus 1 of this embodiment is also configured so that concentrate of the used water-treating reverse osmosis membrane device 43 is mixed as dilution water with the seawater A at the mixing section 2.

Furthermore, the fresh water generating apparatus 1 of this embodiment is configured so that concentrate of the used water-treating reverse osmosis membrane device 43 is transferred as dilution water to the mixing section 2, and permeate of the used water-treating reverse osmosis membrane device 43 is transferred as service water to various sites at which it is used.

Thus, the fresh water generating apparatus of this embodiment has the above configuration, and the description will be hereinafter made for a fresh water generating method of this embodiment.

The fresh water generating method of this embodiment includes: mixing a portion of the seawater A to be subjected to membrane treatment with wastewater as dilution water to produce mixed water; filtering the mixed water by the first seawater-treating reverse osmosis membrane device 3a to produce first concentrate D1 and first permeate that is first fresh water B1; and filtering the remaining portion of the seawater A to be subjected to membrane treatment, in an unmixed state with the dilution water, by the second seawater-treating reverse osmosis membrane device 3b to produce second concentrate D2 and second permeate that is second fresh water B2. The seawater A is filtered by using a clarifier (not shown) that includes at least one of a microfiltration membrane, an ultrafiltration membrane and a sand filtration device, before the seawater A is transferred to the mixing section 2 and the second seawater-treating reverse osmosis membrane device 3b.

According to the fresh water generating method of this embodiment, the first used water C1 resulting from the use of the first fresh water B1 as service water is biologically treated by the biological treatment section 41 to produce biologically treated water; the biologically treated water is treated by the clarifier 42 to produce concentrate and permeate that is fresh water, and the concentrate is used as dilution water to dilute a portion of the seawater A.

Furthermore, according to the fresh water generating method of this embodiment, in order to make clear the dilution effect, the mixing ratio by volume of the seawater A to dilution water is preferably 1 to 0.1 or higher, and more preferably 1 to 1 or higher.

Still furthermore, according to the fresh water generating method of this embodiment, the salt concentration of the mixed water is preferably 3.0 % by mass or lower, and more preferably 1.8 % by mass or lower. Yet furthermore, according to the fresh water generating method of this embodiment, the salt concentration of dilution water is preferably 1/3 (one third) or lower of the salt concentration of the seawater A to be diluted with the dilution water, and more preferably 1/10 (one tenth) or lower of the salt concentration of the seawater A to be diluted with the dilution water. The fresh water generating method of this embodiment produces an advantageous effect that fresh water with higher purity can be produced by making the salt concentration of the dilution water 1/3 (one third) or lower of the salt concentration of the seawater A to be diluted with the dilution water.

The fresh water generating apparatus and the fresh water generating method of this embodiment are not necessarily limited to the above configuration and may be subjected to appropriate modification.

Specifically, in the fresh water generating apparatus 1 of this embodiment, the clarifier 42 is installed as a submerged membrane below the liquid level of the biological treatment tank 41a. However, in the fresh water generating apparatus 1 of the present invention, the clarifier 42 may be of the type that is installed outside the biological treatment tank 41a. In this case, the fresh water generating apparatus 1 of the present invention is configured so that biologically treated water produced at the biological treatment tank 41a is transferred to the clarifier 42.

Although the fresh water generating apparatus 1 of this embodiment includes the used water-treating reverse osmosis membrane device 43, the fresh water generating apparatus 1 of the present invention may not include the used water-treating reverse osmosis membrane device 43. In this case, the fresh water generating apparatus 1 of the present invention is configured so that permeate of the clarifier 42 is mixed as dilution water with seawater at the mixing section 2.

Furthermore, the fresh water generating apparatus 1 of the present invention may not include the clarifier 42. In this case, the fresh water generating apparatus 1 of the present invention is configured so that biologically treated water produced at the biological treatment section 41 is mixed as dilution water with seawater at the mixing section 2.

Still furthermore, in a case where the clarifier 42 is of the type that is installed outside the biological treatment tank 41a, the fresh water generating apparatus 1 of the present invention may be configured so that the clarifier 42 filters and clarifies biologically treated water by a sand filtration device in place of a microfiltration membrane or an ultrafiltration membrane.

Although the fresh water generating apparatus 1 of this embodiment includes the biological treatment section 41, the fresh water generating apparatus 1 of the present invention may include a sedimentation section (not shown) in place of the biological treatment section 41 to separate the first used water C1 by sedimentation to produce supernatant that is sedimentation treated water. In this case, the fresh water generating apparatus 1 of the present invention is configured so that the clarifier 42 is of the type that is installed outside the biological treatment tank 41a so that sedimentation treated water produced at the sedimentation section (not shown) is transferred to the clarifier 42. Also, in this case, in a similar manner to the fresh water generating apparatus 1 of this embodiment, the used water-treating reverse osmosis membrane device 43 may not be provided, and, furthermore, the clarifier 42 may not be provided.

According to the fresh water generating apparatus 1 of this embodiment, the first used water C1 is organic wastewater, but, according to the fresh water generating apparatus 1 of the present invention, the first used water C1 may be inorganic wastewater.

The inorganic wastewater is wastewater containing inorganic matter, and, for example, wastewater having a BOD (Biochemical Oxygen Demand) of 50 mg/L or lower, and preferably wastewater having a BOD of 10 mg/L or lower.

The inorganic wastewater is water having a salt concentration lower than the seawater A to be diluted with dilution water. The inorganic wastewater is, for example, wastewater having a salt concentration ratio relative to the seawater to be diluted with dilution water of 1 to 0.1 or lower, and more specifically wastewater having a salt concentration ratio relative to the seawater to be diluted with dilution water of 1 to 0.01 or lower.

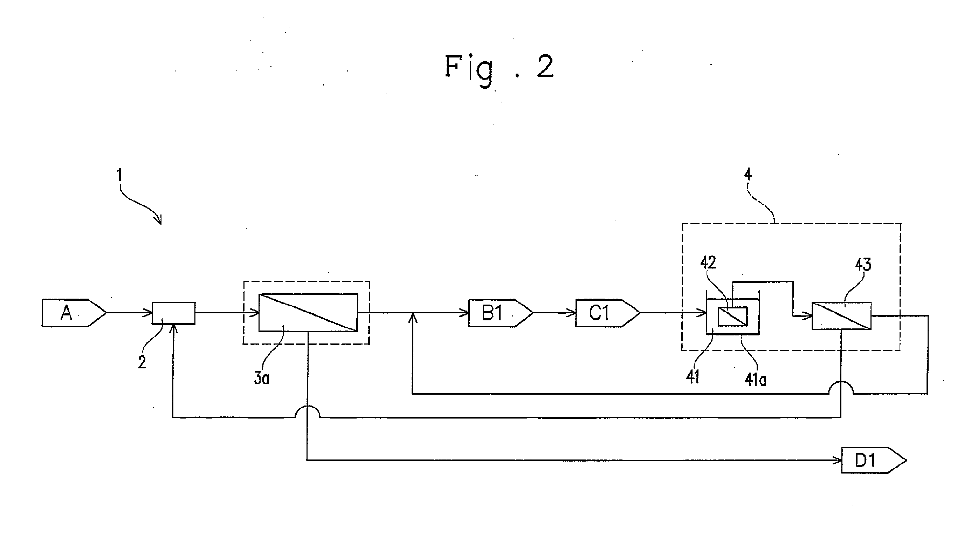

According to the fresh water generating apparatus 1 of this embodiment, the second seawater-treating reverse osmosis membrane device 3b is provided. However, according to the fresh water generating apparatus 1 of the present invention, as shown in Fig. 2, the second seawater-treating reverse osmosis membrane device 3b may not be provided. In this case, the fresh water generating apparatus 1 is configured so that the total amount of the seawater A is transferred to the mixing section 2.

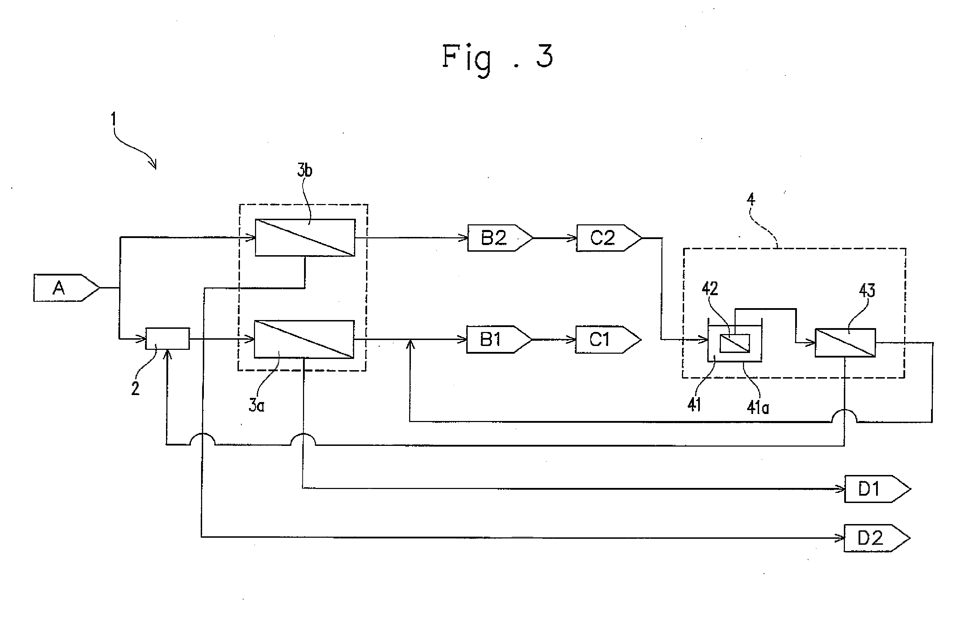

Furthermore, according to the fresh water generating apparatus 1 of this embodiment, the first used water C1 is used as dilution water. However, according to the fresh water generating apparatus 1 of the present invention, as shown in Fig. 3, the second used water C2 may be used as dilution water, in place of the first used water C1. In this case, the fresh water generating apparatus 1 is configured so that the second used water C2 resulting from the use of the second fresh water B2 as service water is transferred to the purification section 4.

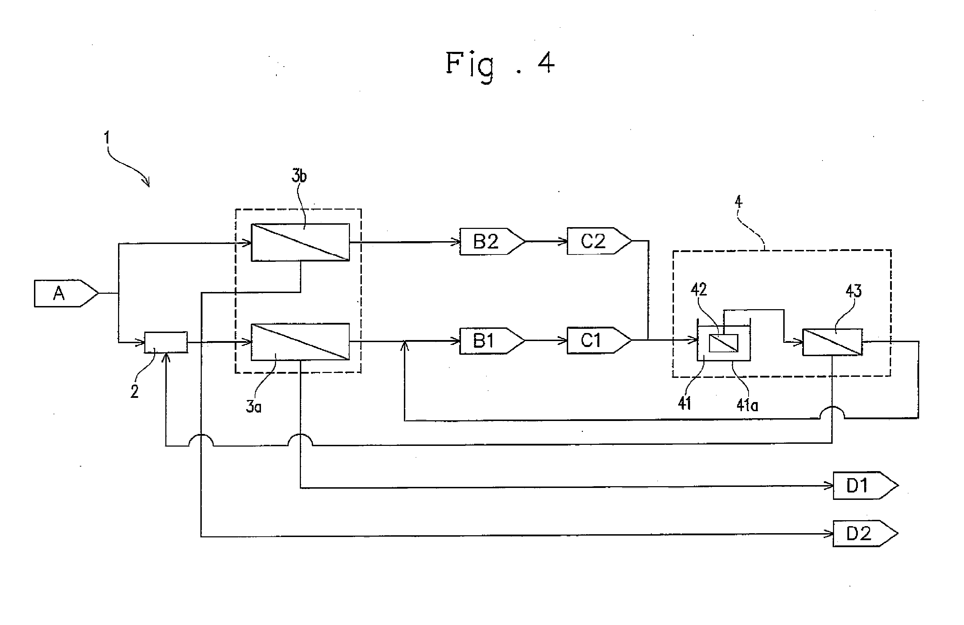

The fresh water generating apparatus 1 of the present invention may be configured, as shown in Fig. 4, so that the second used water C2, as well as the first used water C1, is used as dilution water. In this case, the fresh water generating apparatus 1 of the present invention may be configured, as shown in Fig. 4, so that the first used water C1 and the second used water C2, which have been purified together, are transferred as dilution water to the mixing section 2. Also, the fresh water generating apparatus 1 of the present invention may be configured so that the first used water C1 and the second used water C2, which have been purified independently of each other, are transferred as dilution water to the mixing section 2.

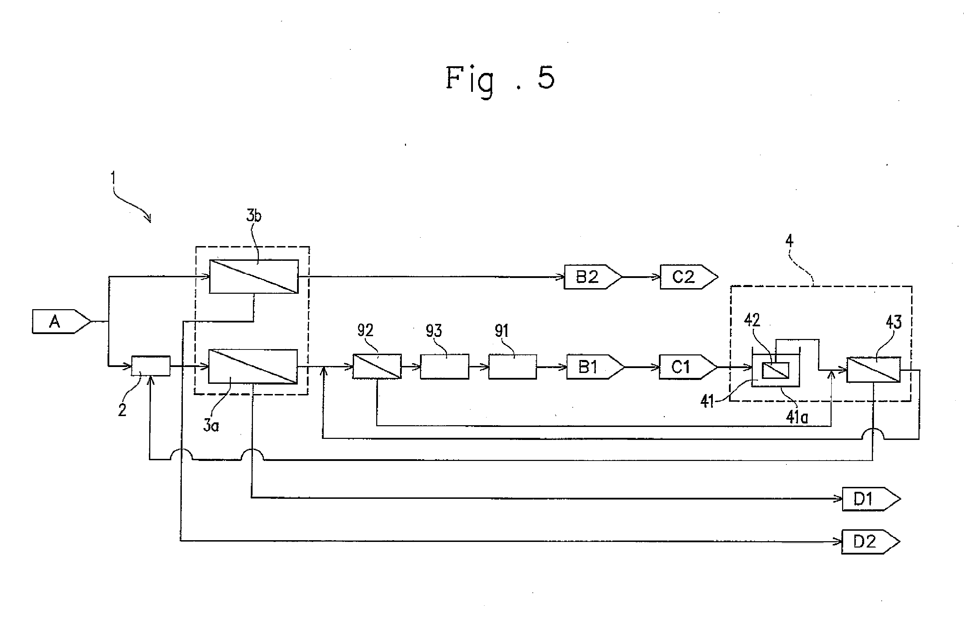

As shown in Fig. 5, the fresh water generating apparatus 1 of the present invention includes a mixed bed ion exchange device 91, into which cation-exchange resin and anion-exchange resin are filled in mixed state, so that ion exchanged water is produced by ion exchange of these resins from fresh water produced from the first seawater-treating reverse osmosis membrane device 3a.

The fresh water generating apparatus 1 of the present invention having the above configuration produces an advantageous effect that ion exchanged water that is fresh water having a low salt concentration can be produced. For example, fresh water, which is a source of water vapor causing rotation of a steam turbine for use in a thermal power plant or the like, preferably has a low salt concentration so as to be able to be efficiently evaporated into vapor with small heat. Since the ion exchanged water has a low salt concentration, the fresh water generating apparatus 1 is preferably used to produce ion exchanged water that is fresh water B1 for use in a steam turbine.

The above fresh water generating apparatus 1 is configured so that the first used water C1 that is wastewater is produced as a result of the use of the ion exchanged water that is the fresh water B1 as service water.

The mixed bed ion exchange device 91 is configured so that ion exchanged water is produced from mixed fresh water produced by mixing fresh water produced from the first seawater-treating reverse osmosis membrane device 3a with fresh water produced from the used water-treating reverse osmosis membrane device 43.

The fresh water generating apparatus 1 also includes a mixed fresh water-treating reverse osmosis membrane device 92 that produces permeate and concentrate from the mixed fresh water by a reverse osmosis membrane. This fresh water generating apparatus 1 is configured so that permeate that is fresh water produced from the mixed fresh water-treating reverse osmosis membrane device 92 is ion-exchanged by using the mixed bed ion exchange device 91 to produce ion exchanged water.

Generally, the ion exchange performance of ion exchange resins of the mixed bed ion exchange device 91 deteriorates by salt. When the ion exchange performance deteriorates, there is a problem that the ion exchange resins must be brought into contact with a regeneration chemical (e.g., acid aqueous solution such as hydrochloric acid aqueous solution, and alkaline aqueous solution such as sodium hydroxide aqueous solution) to regenerate the ion exchange resins. Thus, it is desirable that subject water (water to be treated) introduced into the mixed bed ion exchange device 91 has a concentration equal to or lower than a predetermined level (e.g., equal to or lower than the ppb level). Thus, the fresh water generating apparatus 1 provided with the mixed fresh water-treating reverse osmosis membrane device 92 is advantageous in that the salt concentration of fresh water introduced into the mixed bed ion exchange device 91 is reduced, so that the loading by salt to the mixed bed ion exchange device 91 is reduced and hence the frequency of regenerating the ion exchange resins (regeneration frequency) can be reduced.

The above fresh water generating apparatus 1 may be configured so that concentrate produced from the mixed fresh water-treating reverse osmosis membrane device 92 is transferred to the used water-treating reverse osmosis membrane device 43. In this case, the fresh water generating apparatus 1 is configured so that the concentrate is membrane-separated by the used water-treating reverse osmosis membrane device 43.

Furthermore, the above fresh water generating apparatus 1 includes a degassing device 93 that removes gas such as carbon dioxide from the mixed fresh water to produce degassed water. This fresh water forming apparatus 1 is configured so that the degassed water that is fresh water is ion-exchanged by using the mixed bed ion exchange device 91 to produce ion exchanged water.

If gas such as carbon dioxide, which ionizes in water and generates anion, is dissolved into fresh water introduced into the mixed bed ion exchange device 91, breakthrough of the anion exchange resin may easily occur by this gas. Thus, the fresh water generating apparatus 1, which includes the degassing device 93, reduces the gas concentration of fresh water introduced into the mixed bed ion exchange device 91, and thereby prevents the breakthrough of an ion exchange resin from easily occurring. Hence, there is an advantageous effect that the regeneration frequency can be reduced.

Also, as a result of the reduction of the regeneration frequency, there are advantageous effects that the amount of the regeneration chemical to be used is reduced, the loading by the regeneration chemical is reduced, and hence the operational life of an ion exchange resin itself can be extended.

Still furthermore, the above fresh water generating apparatus 1 is configured so that permeate is produced from the mixed fresh water by the mixed fresh water-treating reverse osmosis membrane device 92; degassed water is produced from the permeate by the degassing device 93; and ion exchanged water is produced from the degassed water by the mixed bed ion exchange device 91.

The fresh water generating apparatus 1 of the present invention may include various deionization devices (ion exchange device), such as an electrodeionization device, in place of the mixed bed ion exchange device 91.

Although not illustrated, the fresh water generating apparatus 1 of the present invention may include a mixed bed ion exchange device that produces ion exchanged water from fresh water produced from the second seawater-treating reverse osmosis membrane device 3b, in place of or in addition to the mixed bed ion exchange device 91 that produces ion exchanged water from fresh water produced from the first seawater-treating reverse osmosis membrane device 3a.

Furthermore, although not illustrated, the fresh water generating apparatus 1 of the present invention may include a mixed bed ion exchange device that produces ion exchanged water from fresh water produced from a seawater-treating reverse osmosis membrane device, in the embodiments of Figs. 2-4.

In the embodiment in which the mixed fresh water-treating reverse osmosis membrane device 92 is not provided, the fresh water generating apparatus 1 of the present invention may be configured so that, without producing the mixed fresh water, degassed water is produced by degassing, by the degassing device 93, fresh water produced from the first seawater-treating reverse osmosis membrane device 3a.

EXAMPLES

Now, more specific description will be made for the present invention with reference to Examples and Comparative Examples.

<Calculation Example 1>

According to the later described methods of Example 1 and Comparative Examples 1 and 2, power (power index value) required for producing fresh water as industrial water at 1000 $m^3$/d was calculated. The power index values were calculated by using the values shown in Table 1 as operation pressure and recovery rate (ratio of permeate relative to the amount of water flown into a membrane $\times$ 100 %) in the following membrane treatments: (Treatment 1-1), in which permeate produced by purification treatment according to a membrane-separation activated sludge method (MBR) is subjected to membrane treatment by a reverse osmosis membrane (RO membrane); (Treatment 1-2), in which mixed water of seawater and dilution water is subjected to membrane treatment by a reverse osmosis membrane (RO membrane); and (Treatment 1-3), in which seawater, which has not been diluted, is subjected to membrane separation by a reverse osmosis membrane (RO membrane). Specifically, the power index values were calculated by the following expression:

$$\text{Power index value} = \text{amount of water flown into a reverse osmosis}$$

$$\text{membrane (RO membrane) per unit time} \times \text{operation pressure}$$

Since power required in the treatment according to the membrane-separation activated sludge method (MBR) and in the treatment by a microfiltration membrane (MF membrane) is much smaller than the power required in the treatment by a reverse osmosis membrane (RO membrane), it was presumed as "0" (zero). The same is also applicable to the other calculation examples.

Table 1

|  | Operation pressure MPa | Recovery rate % |
|---|---|---|
| Treatment 1-1 | 1.0 | 75 |
| Treatment 1-2 | 4.0 | 60 |
| Treatment 1-3 | 7.0 | 40 |

(Comparative Example 1)

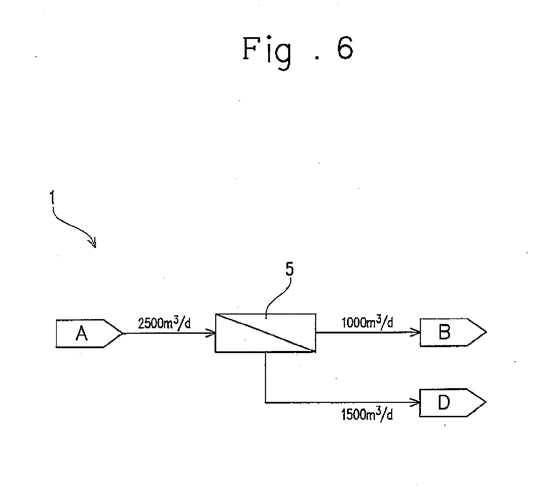

The power index value required in producing fresh water at 1000 $m^3$/d was calculated for the configuration of Fig. 6, in which fresh water B and concentrate D are produced from seawater A, which has not been diluted, by a reverse osmosis membrane device 5. The result is shown in Table 2.

(Comparative Example 2)

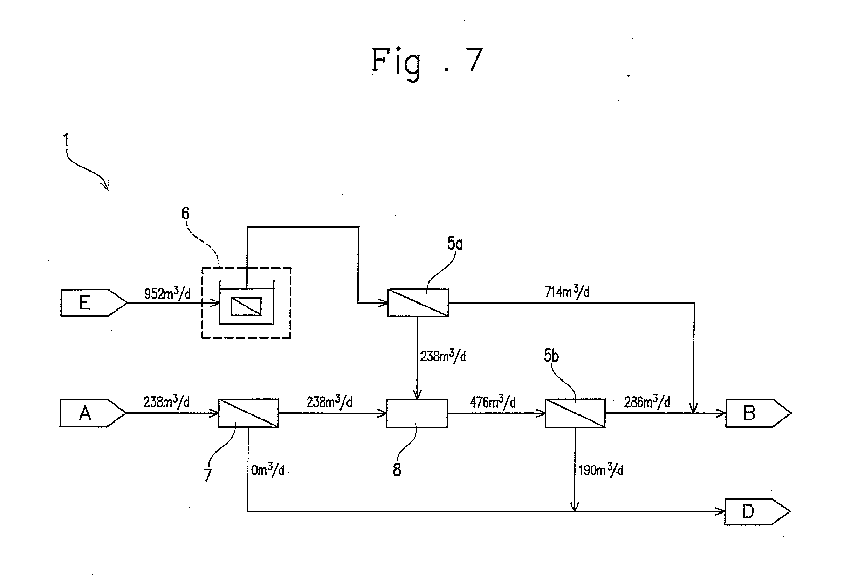

A power index value required in producing fresh water at 1000 m$^3$/d was calculated for the configuration of Fig. 7, in which permeate is produced by purifying sewage water that is wastewater E by a membrane-separation activated sludge treatment device 6; concentrate and permeate that is fresh water B are produced from the permeate of the membrane-separation activated sludge treatment device 6 by a reverse osmosis membrane device 5a; permeate and concentrate D are produced from seawater by a microfiltration device 7; mixed water is produced by mixing the permeate with concentrate from the reverse osmosis membrane device 5a; and concentrate D and permeate that is fresh water B are produced from the mixed water by a reverse osmosis membrane device 5b. The result is shown in Table 2. The recovery rate of the MF membrane was designated as 100 %.

(Example 1)

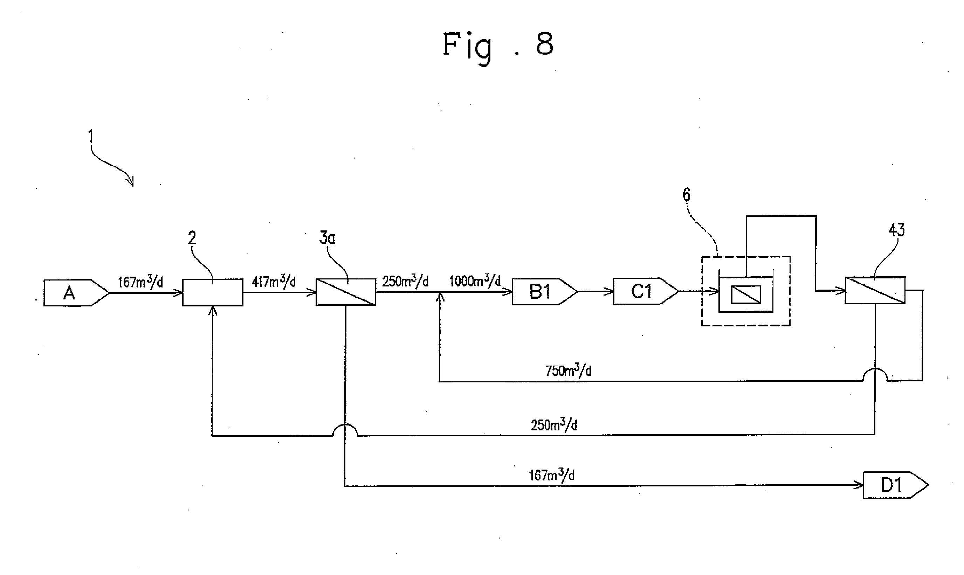

A power index value required in producing fresh water at 1000 m$^3$/d was calculated for the configuration of Fig. 8, in which mixed water is produced by mixing dilution water with seawater A at the mixing section 2; first concentrate D1 and permeate that is first fresh water B1 are produced from the mixed water by the first seawater-treating reverse osmosis membrane device 3a; permeate is produced by a membrane-separation activated sludge treatment device 6 from first used water C1 that is wastewater resulting from the use of the produced first fresh water B1 as service water; permeate and concentrate are produced from the permeate of the membrane-separation activated sludge treatment device 6 by the used water-treating reverse osmosis membrane device 43; wastewater that is the concentrate is mixed as the dilution water with seawater A at the mixing section 2; and permeate produced by the used water-treating reverse osmosis membrane device 43 is used as first fresh water B1 (service water). The result is shown in Table 2. The first used water C1 is organic wastewater.

Table 2

|  | Seawater intake rate m$^3$/d | Outlet water rate m$^3$/d | Power index value MPa · m$^3$/d |
|---|---|---|---|
| Comparative Example 1 | 2,500 | 2,500 | 17,500 |
| Comparative Example 2 | 238 | 190 | 2,856 |
| Example 1 | 167 | 167 | 2,668 |

As shown in Table 2, in Example 1, it is shown that a large amount of dilution water can be produced and hence fresh water can be efficiently and stably produced, as compared with Comparative Example 1, in which seawater A, which has not been diluted, is subjected to membrane treatment by a reverse osmosis membrane (RO membrane), and Comparative Example 2, in which used water resulting from the use of the produced fresh water B is not reused.

<Calculation Example 2>

According to the later described methods of Examples 2-4, and Comparative Example 3, the energy (energy index) required in producing fresh water as water for domestic use (including drinking water) at 10 t/d and producing fresh water as industrial water at 30 t/d was calculated. In the later described Comparative Example 4, the energy required in producing fresh water as industrial water, which was produced from used water, at 30 t/d was calculated.

The energy indices were calculated by using the values shown in Table 3 as operation pressure in the following membrane treatments: (Treatment 2-1), in which seawater, which has not been diluted, is subjected to membrane treatment by a reverse osmosis membrane (RO membrane); (Treatment 2-2), in which mixed water of seawater and dilution water is subjected to membrane treatment by a reverse osmosis membrane (RO membrane); and (Treatment 2-3), in which permeate produced by purification treatment according to a membrane-separation activated sludge method (MBR) is subjected to membrane treatment by a reverse osmosis membrane (RO membrane). Specifically, the energy indices were calculated by the following expression:

$$\text{Energy index} = \text{amount of water flown into a membrane per unit time}$$

$$(\text{water flow rate}) \times \text{operation pressure}$$

Table 3

| | Operation pressure MPa |
|---|---|
| Treatment 2-1 | 7.0 |
| Treatment 2-2 | 4.0 |
| Treatment 2-3 | 1.0 |

(Comparative Example 3)

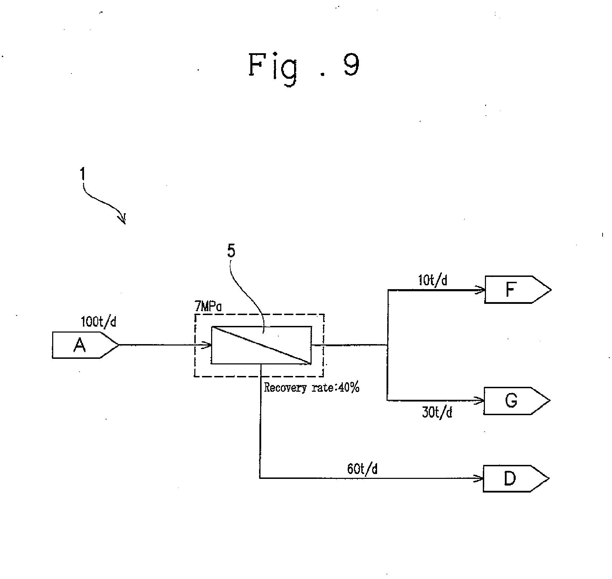

The energy index required in the configuration of Fig. 9, in which fresh water and concentrate D are produced from seawater A, which has not been diluted, by the reverse osmosis membrane device 5, was calculated. By the fresh water is herein meant domestic water F and industrial water G.

(Comparative Example 4)

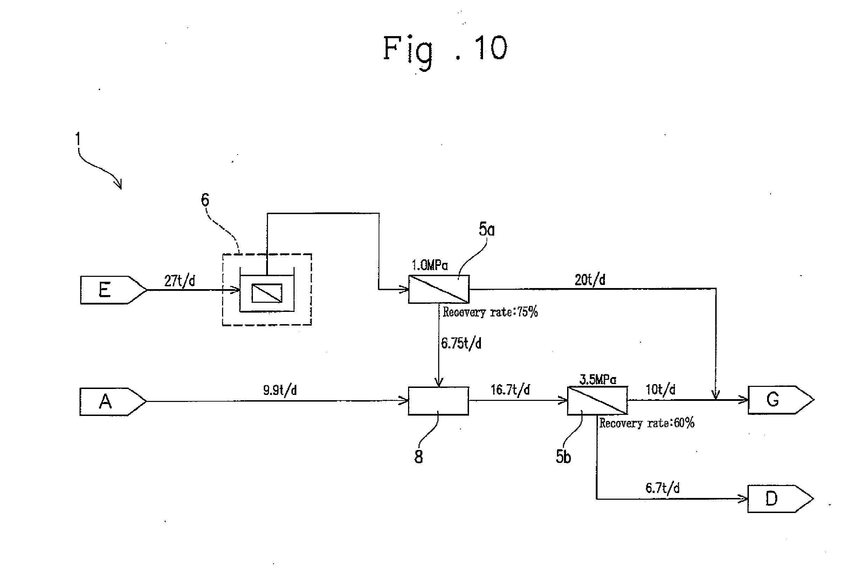

The power index value required in the configuration of Fig. 10, in which permeate is produced by purifying sewage water that is wastewater E by the membrane-separation activated sludge treatment device 6; concentrate and permeate that is industrial water G (fresh water) are produced from the permeate of the membrane-separation activated sludge treatment device 6 by a reverse osmosis membrane device 5a; mixed water is produced by mixing the concentrate with seawater A; and concentrate D and permeate that is the industrial water G are produced from the mixed water by a reverse osmosis membrane device 5b, was calculated.

(Example 2)

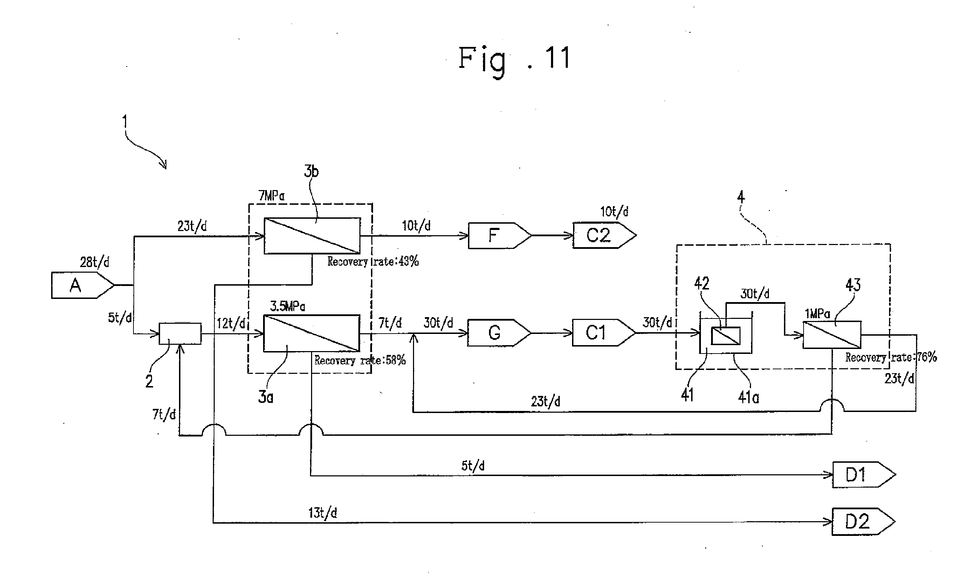

The power index value required in a configuration of Fig. 11, in which mixed water is produced by mixing dilution water with a portion of seawater A to be subjected to membrane treatment by the mixing section 2; first concentrate D1 and permeate that is industrial water G (fresh water) are produced from the mixed water by the first seawater-treating reverse osmosis membrane device 3a; permeate is produced by a membrane-separation activated sludge treatment device (the biological treatment section 41 and the clarifier 42) from first used water C1 that is wastewater resulting from the use of the produced industrial water G as service water; permeate and concentrate are produced from the permeate of the membrane-separation activated sludge treatment device by the used water-treating reverse osmosis membrane device 43; wastewater that is the concentrate is mixed as the dilution water with seawater A at the mixing section 2; permeate produced by the used water-treating reverse osmosis membrane device 43 is used as industrial water G; and second concentrate D2 and permeate that is domestic water F (fresh water) are produced from the remaining portion of the seawater A to be subjected to membrane treatment by the second seawater-treating reverse osmosis membrane device 3b, was calculated.

(Example 3)

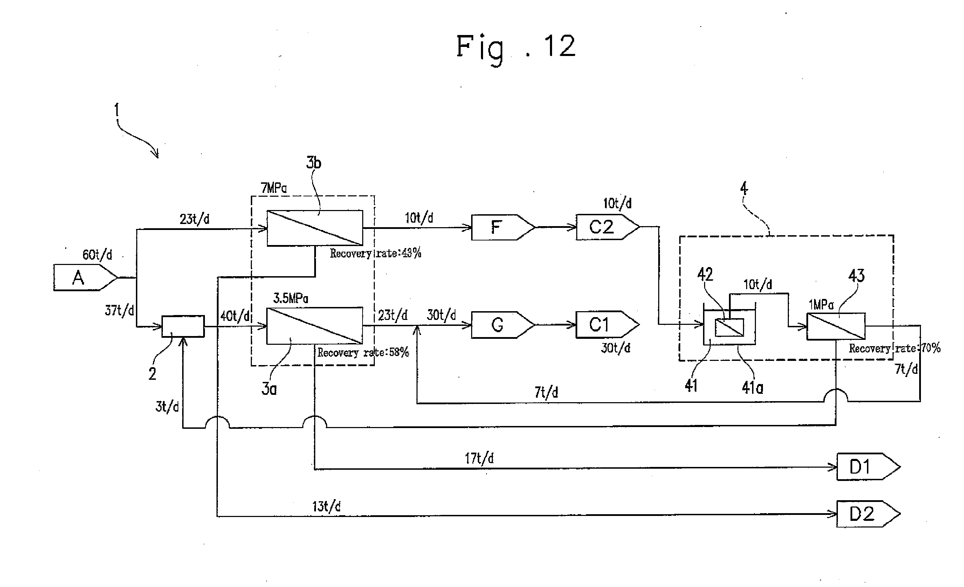

A required power index value was calculated in the configuration of Fig. 12, which is similar to Example 2, except that permeate is produced from second used water C2 that is wastewater resulting from the use of domestic water F as service water, in place of the first used water C1, by the membrane-separation activated sludge treatment device (the biological treatment section 41 and the clarifier 42).

(Example 4)

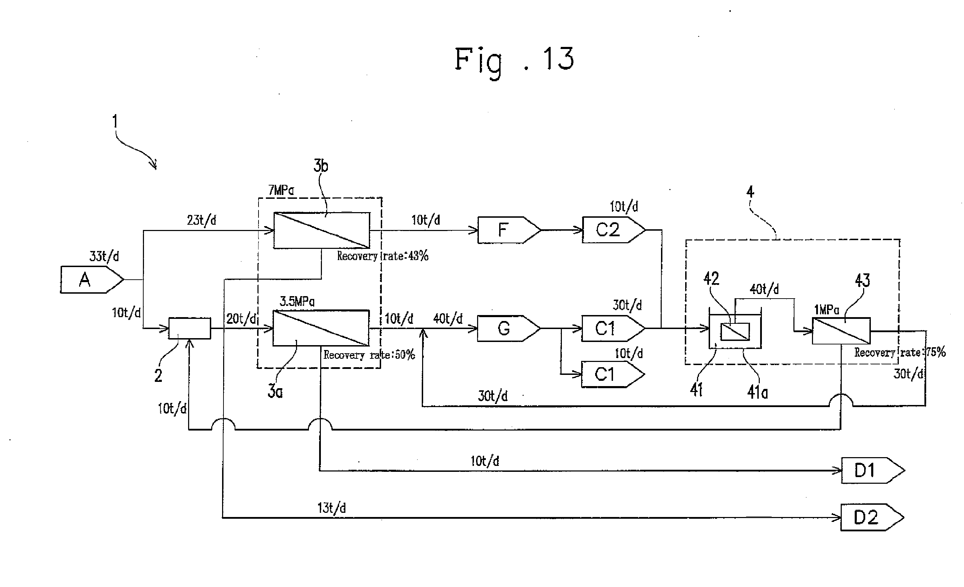

A required power index value was calculated in the configuration of Fig. 13, which is similar to Example 2, except that permeate is produced by a membrane-separation activated sludge treatment device (the biological treatment section 41 and the clarifier 42) from not only the first used water C1, but also the second used water C2 that is wastewater resulting from the use of the domestic water F as service water.

The results are shown in Tables 4 and 5, respectively. Table 4 shows the energy index required for producing the domestic water F and the industrial water G, as well as the discharge rate, and Table 5 shows the energy index required in producing only the industrial water G, as well as the discharge rate. By the discharge rate is herein meant the discharge rate of water, which has been discharged while not being reused.

Table 4

| | Treatment 2-1 | | | Treatment 2-2 | | | Treatment 2-3 | | | Total of energy index MPa·t/d | Discharge rate m³/d |
|---|---|---|---|---|---|---|---|---|---|---|---|
| | Amount of water t/d | Operation pressure MPa | Energy index MPa·t/d | Amount of water t/d | Operation pressure MPa | Energy index MPa·t/d | Amount of water t/d | Operation pressure MPa | Energy index MPa·t/d | | |
| Comparative Example 3 | 100 | 7 | 700 | – | – | – | – | – | – | 700 | 100 |
| Example 2 | 23 | 7 | 161 | 12 | 4 | 48 | 30 | 1 | 30 | 239 | 28 |
| Example 3 | 23 | 7 | 161 | 40 | 4 | 160 | 10 | 1 | 10 | 331 | 60 |
| Example 4 | 23 | 7 | 161 | 20 | 4 | 80 | 40 | 1 | 40 | 281 | 33 |

Table 5

| | Treatment 2-1 | | | Treatment 2-2 | | | Treatment 2-3 | | | Total of energy index MPa·t/d | Discharge rate m³/d |
|---|---|---|---|---|---|---|---|---|---|---|---|
| | Amount of water t/d | Operation pressure MPa | Energy index MPa·t/d | Amount of water t/d | Operation pressure MPa | Energy index MPa·t/d | Amount of water t/d | Operation pressure MPa | Energy index MPa·t/d | | |
| Comparative Example 3 | 75 | 7 | 525 | – | – | – | – | – | – | 525 | 45 |
| Comparative Example 4 | – | – | _ | 16.7 | 4 | 66.8 | 27 | 1 | 27 | 93.8 | 6.68 |
| Example 2 | – | – | _ | 12 | 4 | 48 | 30 | 1 | 30 | 78 | 5 |

As shown in Tables 4 and 5, in Examples 2-4, it is shown that a large amount of dilution water can be produced and hence fresh water can be efficiently and stably produced, as compared with Comparative Examples 3 and 4.

<Calculation Example 3>

The energy index per unit amount of reclaimed water was calculated in a case where the apparatus used in the configuration of Example 4 is used, and the recovery rate and the mixing ratio (mixing volume ratio of seawater and mixed water) are those as shown in Table 6. By the amount of reclaimed water is herein meant the rate of permeate.

Table 6

| | Treatment 2-2 | | | | | Treatment 2-3 | | Total amount of reclaimed water t/d | Total of energy index MPa·t/d | Energy index per unit amount of reclaimed water MPa |
|---|---|---|---|---|---|---|---|---|---|---|
| | Reclaimed rate % | Mixing ratio (Dilution water/seawater) | Operation pressure MPa | Amount of reclaimed water t/d | Energy index MPa·t/d | Amount of reclaimed water t/d | Energy index MPa·t/d | | | |
| Operation Example 1 | 0 | – | – | 0 | 0 | 30 | 39 | 30 | 39 | 1.30 |
| Operation Example 2 | 25 | 10/10 | 3 | 5 | 60 | 30 | 39 | 35 | 99 | 2.83 |
| Operation Example 3 | 50 | 10/10 | 4 | 10 | 80 | 30 | 39 | 40 | 119 | 2.98 |
| Operation Example 4 | 50 | 10/20 | 5 | 10 | 90 | 30 | 39 | 35 | 129 | 3.69 |
| Operation Example 5* | 40 | 0/100 | 7.5 | 30 | 562.5 | 0 | 0 | 30 | 562.5 | 18.75 |

*In Operation Example 5, the treatment is actually not Treatment 2-2, but Treatment 2-1.

As shown in Table 6, in comparison between Operation Example 1 and Operation Example 2, the energy index per unit amount of reclaimed water of Operation Example 1 is small than Operation 2 because seawater is not used, while the total amount of reclaimed water of Operation Example 2 is large because seawater is used. In comparison between Operation Example 2 and Operation Example 3, the energy index per unit amount of reclaimed water of Operation 2 is smaller than Operation 3 because the recovery rate of the first seawater-treating reverse osmosis membrane device is reduced, while the total amount of reclaimed water of Operation Example 3 is larger than Operation 2 because the recovery rate of the first seawater-treating reverse osmosis membrane device is increased. In comparison between Operation Example 3 and Operation Example 4, the total amount of reclaimed water of Operation Example 3 is larger than Operation Example 4 because the ratio of dilution water used relative to seawater is large. The energy index per unit amount of reclaimed water of Operation Example 5 is larger than the other Operation Examples because the amount of seawater treated by the seawater-treating reverse osmosis membrane device (second seawater-treating reverse osmosis membrane device) is larger than those of other Operation Examples.

DESCRIPTION OF THE REFERENCE NUMERALS

1: fresh water generating apparatus, 2: mixing section, 3a: first seawater-treating reverse osmosis membrane device, 3b: second seawater-treating reverse osmosis membrane device, 4: purification section, 5: reverse osmosis membrane device, 5a: reveres osmosis membrane device, 5b: reveres osmosis membrane device, 6: membrane-separation activated sludge treatment device, 7: microfiltration device, 8: mixing section, 41: biological treatment section, 41a: biological treatment tank, 42: clarifier, 43: used water-treating reverse osmosis membrane device, 91: mixed bed ion exchange device, 92: mixed fresh water-treating reverse osmosis membrane device, 93: degassing device, A: seawater, B: fresh water, B1: first fresh water, B2: second fresh water, C1: first used water, C2: second used water, D: concentrate, D1: first concentrate, D2: second concentrate, E: wastewater, F: domestic water, G: industrial water

**Claims**

1. A fresh water generating apparatus equipped with a seawater-treating reverse osmosis membrane device that produces fresh water from seawater by a reverse osmosis membrane, comprising a mixing section that mixes wastewater as dilution water with seawater to produce mixed water, and a first seawater-treating reverse osmosis membrane device that acts as the seawater-treating reverse osmosis membrane device to filter the mixed water, wherein the apparatus is configured so that used water is wastewater; wherein the apparatus is configured so that used water that is wastewater resulting from the use of the produced fresh water as service water is mixed as dilution water with seawater at the mixing section.

2. The fresh water generating apparatus according to claim 1, wherein the mixing section is configured so that a portion of seawater to be subjected to membrane treatment is mixed with the dilution water to produce mixed water, and the apparatus further comprises a second seawater-treating reverse osmosis membrane device that acts as the aforesaid seawater-treating reverse osmosis membrane device to filter the remaining portion of the seawater to be subjected to membrane treatment, in an unmixed state with the dilution water.

3. The fresh water generating apparatus according to claim 2, wherein the fresh water generating apparatus is configured so that used water that is wastewater resulting from the use of fresh water produced by the first reverse osmosis memebrane device as service water, and used water that is wastewater resulting from the use of fresh water produced by the second seawater-treating reverse osmosis membrane device as service water are mixed as dilution water with seawater at the mixing section.

4. The fresh water generating apparatus according to any one of claims 1-3, further comprising a used water-treating reverse osmosis membrane device that produces concentrate and permeate that is fresh water by a reverse osmosis membrane from used water that is wastewater resulting from the use of the produced fresh water as service water, wherein the apparatus is configured so that the concentrate that is used water is mixed as dilution water with seawater at the mixing section.

5. The fresh water generating apparatus according to any one of claims 1-3, wherein used water is organic wastewater, and the apparatus further comprises a biological treatment section that biologically treats the used water to produce biologically treated water and is configured so that the biologically treated water is mixed as dilution water with seawater at the mixing section.

6. The fresh water generating apparatus according to claim 5, further comprising a clarifier that filters the biologically treated water by at least one of a microfiltration membrane, an ultrafiltration membrane and a sand filtration device, wherein the apparatus is configured so that permeate of the clarifier is mixed as dilution water with seawater at the mixing section.

7. The fresh water generating apparatus according to any one of claims 1-3, further comprising a sedimentation section that separates used water by sedimentation to produce supernatant that is sedimentation treated water, wherein the apparatus is configured so that the supernatant is mixed as dilution water with seawater at the mixing section.

8. The fresh water generating apparatus according to claim 7, further comprising a clarifier that filters the supernatant by at least one of a microfiltration membrane, an ultrafiltration membrane and a sand filtration device, wherein the apparatus is configured so that permeate of the clarifier is mixed as dilution water with seawater at the mixing section.

9. The fresh water generating apparatus according to any one of claim 4, wherein used water is organic wastewater, and the apparatus further comprises a biological treatment section that biologically treats the used water to produce biologically treated water, and a clarifier that filters the biologically treated water by at least one of a microfiltration membrane, an ultrafiltration membrane and a sand filtration device, and is configured so that permeate of the clarifier is filtered as used water at the used water-treating reverse osmosis membrane device.

10. The fresh water generating apparatus according to any one of claim 4, further comprising a sedimentation section that separates used water by sedimentation to produce supernatant that is sedimentation treated water, and a clarifier that filters the supernatant by at least one of a microfiltration membrane, an ultrafiltration membrane and a sand filtration device, wherein the apparatus is configured so that permeate of the clarifier is filtered as used water at the used water-treating reverse osmosis membrane device.

11. The fresh water generating apparatus according to any one of claim 6, further comprising a biological treatment tank for biological treatment, wherein the clarifier includes at least one of a microfiltration membrane and an ultrafiltration membrane, and the clarifier is installed as a submerged membrane below the liquid level within the biological treatment tank.

12. The fresh water generating apparatus according to any one of claim 9, further comprising a biological treatment tank for biological treatment, wherein the clarifier includes at least one of a microfiltration membrane and an ultrafiltration membrane, and the clarifier is installed as a submerged membrane below the liquid level within the biological treatment tank.

**13.** The fresh water generating apparatus according to any one of claims 1-3, further comprising an ion exchange device that produces ion exchanged water by ion exchange from fresh water produced from the seawater-treating reverse osmosis membrane device.

**14.** A fresh water generating method for producing fresh water from seawater by a seawater-treating reverse osmosis membrane device having a reverse osmosis membrane, which comprises mixing wastewater as dilution water with seawater to produce mixed water, filtering the mixed water by a first seawater-treating reverse osmosis membrane device that acts the seawater-treating reverse osmosis membrane device, and mixing used water that is wastewater, which results from the use of the produced fresh water as service water, as dilution water with seawater.

Fig . 1

# Fig.2

Fig . 3

EP 2 586 748 A1

Fig. 4

# Fig . 5

EP 2 586 748 A1

Fig . 6

EP 2 586 748 A1

EP 2 586 748 A1

# Fig . 7

# Fig . 8

Fig. 9

EP 2 586 748 A1

# Fig . 10

1

6

5a

1.0MPa

E

27t/d

20t/d

Recovery rate:75%

6.75t/d

A

9.9t/d

16.7t/d

3.5MPa

10t/d

G

Recovery rate:60%

8

5b

6.7t/d

D

Fig . 11

Fig.12

Fig . 13

EP 2 586 748 A1

<table>
<tr><td colspan="2" align="center"><strong>INTERNATIONAL SEARCH REPORT</strong></td><td colspan="2">International application No.<br>PCT/JP2011/060914</td></tr>
</table>

**A. CLASSIFICATION OF SUBJECT MATTER**

*C02F1/44*(2006.01)i, *B01D21/00*(2006.01)i, *B01D21/24*(2006.01)i, *B01D61/02*
(2006.01)i, *B01D61/58*(2006.01)i, *C02F3/12*(2006.01)i

According to International Patent Classification (IPC) or to both national classification and IPC

**B. FIELDS SEARCHED**

Minimum documentation searched (classification system followed by classification symbols)
C02F1/44, B01D21/00, B01D21/24, B01D61/02, B01D61/58, C02F3/12

Documentation searched other than minimum documentation to the extent that such documents are included in the fields searched
Jitsuyo Shinan Koho          1922–1996   Jitsuyo Shinan Toroku Koho   1996–2011
Kokai Jitsuyo Shinan Koho    1971–2011   Toroku Jitsuyo Shinan Koho   1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2010/61879 A1 (Kobelco Eco-Solutions Co., Ltd.),<br>03 June 2010 (03.06.2010),<br>paragraphs [0212] to [0232]; fig. 15<br>& US 2011/0042306 A | 1–14 |
| Y | JP 2007-313445 A (Nippon Rensui Co., Ltd.),<br>06 December 2007 (06.12.2007),<br>paragraphs [0019] to [0030]; fig. 1<br>(Family: none) | 1–14 |
| Y | JP 2007-000699 A (Kurita Water Industries Ltd.),<br>11 January 2007 (11.01.2007),<br>paragraph [0003]; fig. 7<br>(Family: none) | 1–14 |

☒ Further documents are listed in the continuation of Box C.        ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 August, 2011 (08.08.11) | Date of mailing of the international search report<br>16 August, 2011 (16.08.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/060914 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-216749 A  (Organo Corp.),<br>18 August 1998 (18.08.1998),<br>paragraphs [0038], [0039]; fig. 4<br>(Family: none) | 1-14 |
| Y | JP 2008-161797 A  (Toray Industries, Inc.),<br>17 July 2008 (17.07.2008),<br>claim 1; paragraph [0020]<br>(Family: none) | 2,3 |
| Y | JP 2006-346543 A  (Asahi Kasei Chemicals Corp.),<br>28 December 2006 (28.12.2006),<br>paragraphs [0094] to [0097]<br>& US 2010/0264084 A1    & EP 1900691 A1 | 13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008055317 A

**Non-patent literature cited in the description**

- Water circulation in seafront industrial city, Significant reduction of power by membrane treatment, Development of process by KOBELCO ECO-SOLUTION CO., LTD., ET AL., Adopted in the projects of Japan, Ministry of Economy, Trade and Industry. *The Chemistry Daily,* 03 March 2009, 10